# EUROPEAN PATENT SPECIFICATION

(11) **EP 3 616 833 B1**
(45) Date of publication and mention of the grant of the patent: **28.04.2021**
(21) Application number: 19193301.9
(22) Date of filing: 23.08.2019
(51) Int. Cl.: B23Q 11/08, B23Q 11/00, B23Q 11/10

(54) **CUTTING APPARATUS**
SCHNEIDVORRICHTUNG
APPAREIL DE DÉCOUPAGE

(30) Priority: 24.08.2018 JP 2018157610
(43) Date of publication of application: 04.03.2020
(73) Proprietor: DGSHAPE Corporation, Hamamatsu-shi, Shizuoka 431-2103 (JP)
(72) Inventor: SUYAMA, Akihiro, Hamamatsu-shi, Shizuoka 431-2103 (JP)
(74) Representative: Grünecker Patent- und Rechtsanwälte PartG mbB

(56) References cited:
- DE-U1- 8 813 510
- DE-U1- 29 916 610
- GB-A- 2 086 290
- JP-A- 2001 328 046
- JP-A- 2017 019 040

## Description

### BACKGROUND OF THE INVENTION

### 1. Field of the Invention

The present invention relates to cutting apparatuses. A cutting apparatus according to the preamble of independent claim 1 is known from GB 2 086 290 A.

### 2. Description of the Related Art

Cutting apparatuses known in the related art cut ceramic or resin workpieces into desired shapes. Such a cutting apparatus includes, for example, a case body, a cover, a retainer, and a gripper. A machining space is defined in the case body. The case body is provided with an opening through which the machining space is brought into communication with an external space. The cover covers the opening during cutting. The retainer is disposed in the machining space and retains a workpiece. The gripper is disposed in the machining space and grips a machining tool to carry out machining (e.g., cutting and/or grinding) on the workpiece.

During cutting, friction occurs between the workpiece and the machining tool. An increase in frictional force resulting from the friction may require a greater cutting force during cutting. Heat caused by the friction may deform the workpiece or may promote wearing away of the machining tool. To solve these problems, JP 2016-135519 A, for example, discloses a "wet type" cutting apparatus that includes a liquid discharger in addition to the above-described components of the cutting apparatus known in the related art. The liquid discharger discharges a cutting liquid (e.g., a coolant) onto the machining tool and the workpiece so as to reduce friction between the machining tool and the workpiece and cool the machining tool and the workpiece.

### SUMMARY OF THE INVENTION

During cutting carried out by the wet type cutting apparatus, the coolant adheres not only to wall surfaces that define the machining space but also to the cover. Opening the cover with force after cutting, for example, may thus cause the coolant adhering to the cover to drip out of the machining space. This may unfortunately contaminate an area adjacent to the cutting apparatus (such as a floor).

Accordingly, embodiments of the present invention provide a cutting apparatus that is unlikely to contaminate an area adjacent thereto with a coolant when a cover is opened after cutting.

A cutting apparatus according to the present invention is defined in independent claim 1. Preferred embodiments are laid down in the dependent claims.

With the cover in the closed state, the guide of the cutting apparatus serves as a liquid passage along which the coolant is returned to the machining space. The coolant scattered on the cover is thus suitably returned to the machining space. During the transition between the open state and the closed state, the extremity of the guide will not move outward of the edge of the opening when viewed in the front-rear direction of the machining space. Accordingly, if the coolant adhering to the cover drips when the cover is opened by a user after cutting, droplets of the coolant would fall into the machining space. This makes it unlikely that an area adjacent to the cutting apparatus will be contaminated with the coolant. Consequently, the area adjacent to the cutting apparatus will be kept in a clean state.

Various embodiments of the present invention provide a cutting apparatus that is unlikely to contaminate an area adjacent thereto with a coolant when a cover is opened after cutting.

### BRIEF DESCRIPTION OF THE DRAWINGS

FIG. 1 is a perspective view of a cutting apparatus according to an embodiment of the present invention.
FIG. 2 is a front view of the cutting apparatus illustrated in FIG. 1, with its front upper cover opened.
FIG. 3 is a cross-sectional view of the cutting apparatus illustrated in FIG. 1, with its front upper cover closed.
FIG. 4 is a perspective view of a workpiece attached to a holder according to the embodiment of the present invention.
FIG. 5 is a perspective view of a tool magazine and a clamp according to the embodiment of the present invention.
FIG. 6 is a front view of the tool magazine and the clamp according to the embodiment of the present invention.
FIG. 7 is a rear perspective view of the front upper cover according to the embodiment of the present invention.
FIG. 8 is a plan view of a gasket according to the embodiment of the present invention.
FIG. 9 is a cross-sectional view of the gasket taken along the line IX-IX in FIG. 8.
FIG. 10 is a perspective view of the front upper cover in its closed state.
FIG. 11 is a partial cross-sectional view of the cutting apparatus, schematically illustrating a path the front upper cover follows when the front upper cover is opened.

### DETAILED DESCRIPTION OF THE PREFERRED EMBODIMENTS

Cutting apparatuses according to embodiments of the present invention will be described below with reference to the drawings. The embodiments described below are naturally not intended to limit the present invention in any way. Components or elements having the same functions are identified by the same reference signs, and description thereof will be simplified or omitted when deemed redundant.

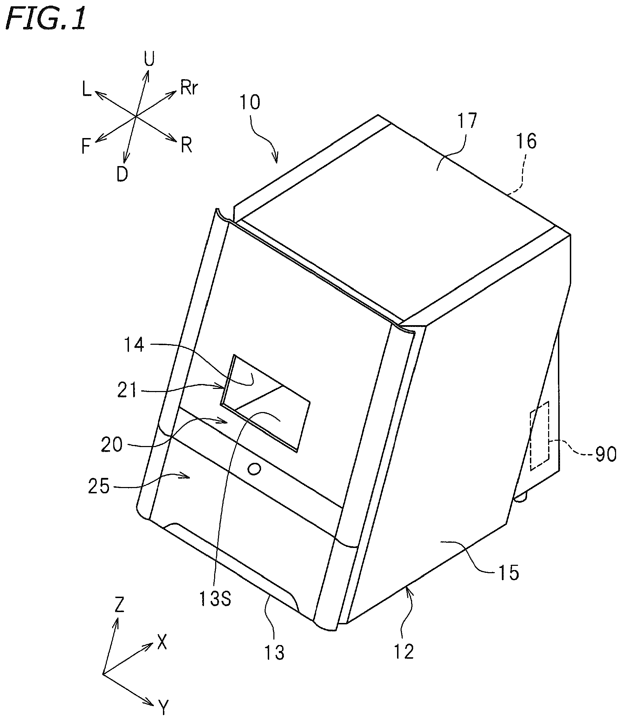

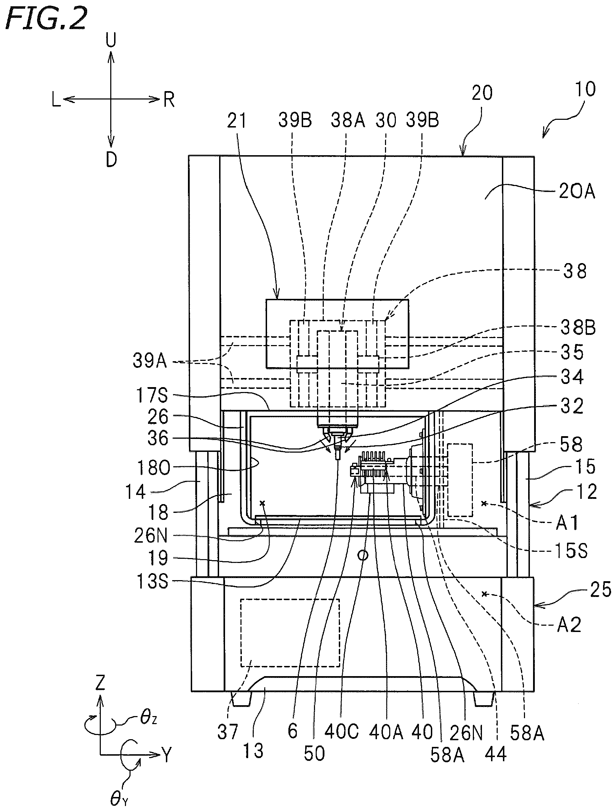

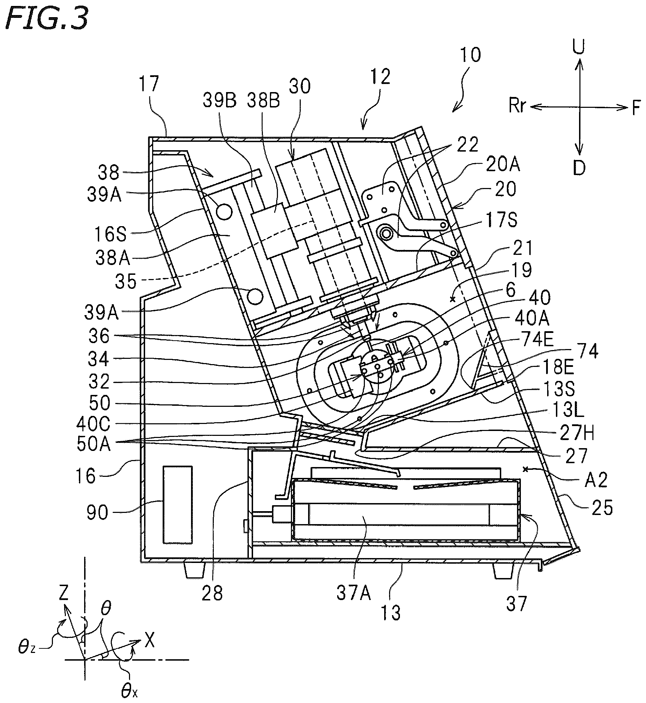

FIG. 1 is a perspective view of a cutting apparatus 10. FIG. 2 is a front view of the cutting apparatus 10, with its front upper cover 20 opened. FIG. 3 is a cross-sectional view of the cutting apparatus 10, with the front upper cover 20 closed. The following description is based on the assumption that when a user faces the front of the cutting apparatus 10, a direction from the rear of the cutting apparatus 10 toward the user is a forward direction and a direction from the user toward the rear of the cutting apparatus 10 is a rearward direction. The terms "right", "left", "up", and "down" respectively refer to right, left, up, and down with respect to the user facing the front of the cutting apparatus 10. The reference signs F, Rr, R, L, U, and D in the drawings respectively represent front, rear, right, left, up, and down.

The cutting apparatus 10 is disposed on a coordinate system including an X axis, a Y axis, and a Z axis perpendicular to each other (which will hereinafter be referred to as an "X, Y, and Z orthogonal coordinate system"). The X axis extends substantially in a front-rear direction. As illustrated in FIG. 3, the X axis is inclined relative to a horizontal direction by an angle θ in the present embodiment. Alternatively, the X axis may extend in the horizontal direction. In other words, the angle θ may be zero degrees. The Y axis extends in a right-left direction. The Z axis extends substantially in an up-down direction. As illustrated in FIG. 3, the Z axis is inclined relative to a vertical direction by the angle θ in the present embodiment. Alternatively, the Z axis may extend in the vertical direction. In other words, the angle θ may be zero degrees. The reference sign θₓ represents a rotational direction around the X axis. The reference sign 0y represents a rotational direction around the Y axis. The reference sign θ_{z} represents a rotational direction around the Z axis. These directions are defined merely for the sake of convenience of description and do not limit in any way how the cutting apparatus 10 may be installed. These directions do not limit the present invention in any way.

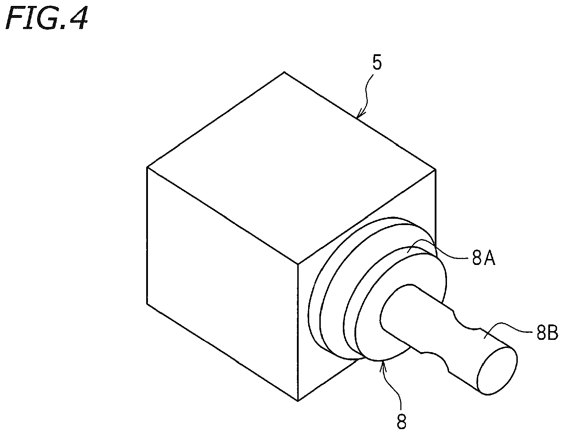

The cutting apparatus 10 cuts a workpiece 5 (see FIG. 4). The cutting apparatus 10 grinds the workpiece 5 when necessary. The cutting apparatus 10 machines the workpiece 5 so as to fabricate a molded article for dental use. Examples of such a molded article include a dental prosthetic (such as a crown, an inlay, an onlay, or a veneer), an artificial tooth, and a denture base. In the present embodiment, the workpiece 5 has a block shape (such as a cubic or cuboid shape). Alternatively, the workpiece 5 may have any other suitable shape, such as a disk shape. Examples of material(s) for the workpiece 5 include resin materials (such as polymethyl methacrylate (PMMA) resin, polyether ether ketone (PEEK) resin, and hybrid resin), ceramic materials (such as glass ceramic and zirconia), wax, and gypsum. When zirconia is selected as a material for the workpiece 5, semi-sintered zirconia, for example, is used. The workpiece 5 is not limited to any particular shape or material.

As illustrated in FIG. 4, the workpiece 5 is attached to a holder 8 (which may also be referred to as an "adapter") in the present embodiment. The workpiece 5 attached to the holder 8 is held in the cutting apparatus 10. The workpiece 5 retained by the holder 8 is subjected to cutting. The holder 8 is integrally molded with the workpiece 5 in the present embodiment. The holder 8 includes a plate 8A and a connecting pin 8B. The plate 8A and the connecting pin 8B are integral with each other. The connecting pin 8B protrudes from the plate 8A. The connecting pin 8B is inserted into an insertion hole 50A defined in a clamp 50 (which will be described below).

The cutting apparatus 10 is configured such that a coolant is usable during cutting. The cutting apparatus 10 is a "wet type" cutting apparatus. As used herein, the term "coolant" may refer to a water-soluble coolant or a water-insoluble coolant. The term "coolant" may refer to water or a coolant provided by adding, for example, an additive to water so as to enhance the cooling effect of the water. In one example, the coolant may consist mainly of water (which is higher in mass percentage than other components) and contain a water-insoluble component (such as mineral oil or grease) and a surfactant.

As illustrated in FIGS. 1 to 3, the cutting apparatus 10 has a box shape. The cutting apparatus 10 includes a case body 12, the front upper cover 20 (which will be described below), and a front lower cover 25. The case body 12 is a casing of the cutting apparatus 10. The case body 12 is hollow. The case body 12 includes a bottom wall 13, a left wall 14, a right wall 15, a rear wall 16, an upper wall 17, a front wall 18, a first bottom partition 13S, a right partition 15S, a first rear partition 16S, an upper partition 17S, a second bottom partition 27, and a second rear partition 28. The left wall 14 extends upward from the left end of the bottom wall 13. The right wall 15 extends upward from the right end of the bottom wall 13. The rear wall 16 extends upward from the rear end of the bottom wall 13. The left end of the rear wall 16 is connected to the rear end of the left wall 14. The right end of the rear wall 16 is connected to the rear end of the right wall 15. The front wall 18 extends upward from the front end of the first bottom partition 13S. The left end of the front wall 18 is connected to the front end of the left wall 14. The right end of the front wall 18 is connected to the front end of the right wall 15. The upper end of the front wall 18 is connected to the front end of the upper wall 17. The upper wall 17 is connected to the upper ends of the left wall 14, the right wall 15, the rear wall 16, and the front wall 18.

The first bottom partition 13S is located above the bottom wall 13. The first bottom partition 13S extends from the front of the cutting apparatus 10 toward the rear of the cutting apparatus 10 such that the first bottom partition 13S is inclined gradually downward. A lid 13L is disposed behind the first bottom partition 13S. The lid 13L has a mesh structure that allows the coolant to pass therethrough in the up-down direction. The right partition 15S is disposed rightward of the left wall 14 and leftward of the right wall 15. The right partition 15S extends upward from the first bottom partition 13S. The first rear partition 16S is disposed forward of the rear wall 16 and rearward of the front wall 18. The first rear partition 16S is connected to the first bottom partition 13S, the left wall 14, the right partition 15S, and the upper partition 17S. The upper partition 17S is disposed above the first bottom partition 13S and below the upper wall 17. The upper partition 17S extends in parallel or substantially in parallel with the first bottom partition 13S.

The second bottom partition 27 is disposed below the first bottom partition 13S and above the bottom wall 13. The second bottom partition 27 extends in parallel or substantially in parallel with the bottom wall 13. The second bottom partition 27 is provided with a drainage port 27H passing through the second bottom partition 27 in the up-down direction. The drainage port 27H is constantly in an open state. The drainage port 27H is provided with no switching member (such as a valve element) that enables switching between the open state and closed state. The second rear partition 28 is disposed forward of the rear wall 16 and rearward of the front wall 18. The second rear partition 28 is disposed below the first rear partition 16S. The second rear partition 28 extends in parallel or substantially in parallel with the rear wall 16. The second rear partition 28 extends upward from the bottom wall 13. The upper end of the second rear partition 28 is connected to the second bottom partition 27.

A lateral surface of the case body 12 (which is the front wall 18 of the case body 12 in the present embodiment) is provided with an opening 180. The opening 180 is defined by the left wall 14, the first bottom partition 13S, the right partition 15S, and the upper partition 17S. The internal space of the case body 12 is divided into a right space and a left space by the right partition 15S. The left space of the case body 12 defines a machining space 19 surrounded by the left wall 14, the first bottom partition 13S, the right partition 15S, the upper partition 17S, the first rear partition 16S, and the front upper cover 20. The machining space 19 is a space where the workpiece 5 is to be cut. Each of the left wall 14 and the right partition 15S is an example of a side partition that defines a side of the machining space 19. The right space of the case body 12 defines a first housing space A1 surrounded by the right partition 15S, the first bottom partition 13S, the right wall 15, the upper partition 17S, the first rear partition 16S, and the front wall 18. A second housing space A2 is defined below the machining space 19. The second housing space A2 is surrounded by the left wall 14, the bottom wall 13, the right wall 15, the second bottom partition 27, the second rear partition 28, and the front lower cover 25. The second housing space A2 is in constant communication with the machining space 19 through the drainage port 27H defined in the second bottom partition 27.

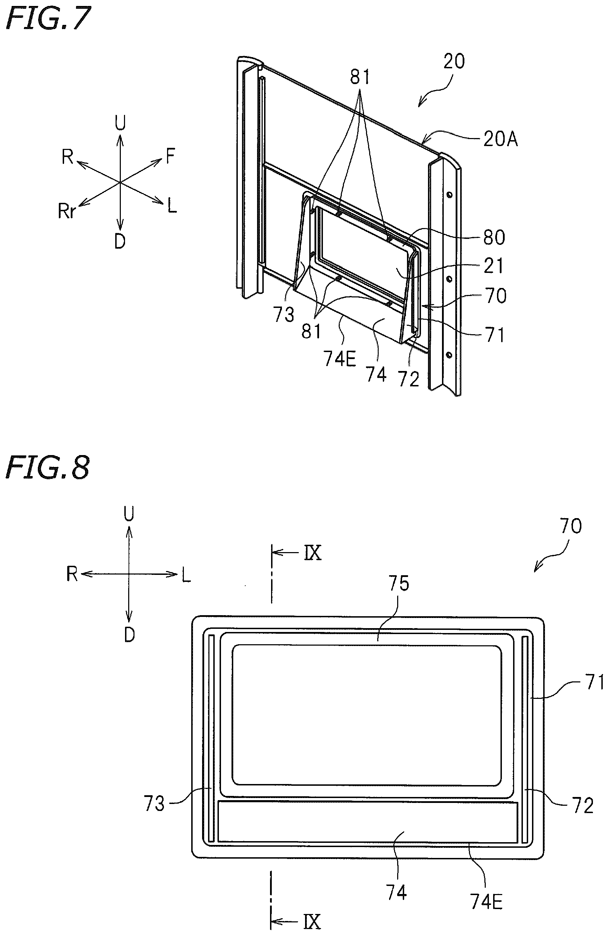

The front wall 18 is provided with a stepped portion 26 (see FIG. 2). The stepped portion 26 extends along the edge of the opening 180. The stepped portion 26 has a rectangular frame shape when viewed along the X axis. With the front upper cover 20 closed, the stepped portion 26 faces a seal 71 (see FIG. 7) of a gasket 70. A region of the stepped portion 26 adjacent to the opening 180 (i.e., a region of the stepped portion 26 adjacent to the machining space 19) is smaller in thickness than a region of the stepped portion 26 away from the opening 180 (i.e., a region of the stepped portion 26 away from the machining space 19) when viewed in the right-left direction. In the present embodiment, no gasket made of silicon or rubber, for example, is disposed on the stepped portion 26.

The lower end of the stepped portion 26 is provided with cut-out grooves 26N. In the present embodiment, the number of cut-out grooves 26N is two in total. One of the cut-out grooves 26N is provided on the left lower end of the stepped portion 26. The other cut-out groove 26N is provided on the right lower end of the stepped portion 26. Each cut-out groove 26N extends substantially straightly in the front-rear direction of the case body 12. The bottom of each cut-out groove 26N is flush with the first bottom partition 13S. With the front upper cover 20 closed, each cut-out groove 26N serves as a liquid passage through which the coolant scattered on the gasket 70 is returned to the machining space 19.

The front lower cover 25 is slidable in the front-rear direction along a support (not illustrated) attached to the left wall 14 and the right wall 15. The movement of the front lower cover 25 in the front-rear direction enables switching between an open state where the second housing space A2 is uncovered by the front lower cover 25 and a closed state where the second housing space A2 is covered by the front lower cover 25. Because the front lower cover 25 is optional, the cutting apparatus 10 does not necessarily have to include the front lower cover 25. The second housing space A2 may be constantly uncovered.

The cutting apparatus 10 includes a carriage 38, a tool magazine 40, the clamp 50, a conveyor 58, a storage tank 37, and a controller 90. The carriage 38 is disposed above the machining space 19. The carriage 38 is equipped with a spindle 30 and liquid discharge nozzles 36. The spindle 30 passes through the upper partition 17S. The tool magazine 40 and the clamp 50 are disposed in the machining space 19. The conveyor 58 is disposed in the first housing space A1. The storage tank 37 is disposed in the second housing space A2.

The carriage 38 is movable in a Z-axis direction and a Y-axis direction. As used herein, the term "Z-axis direction" refers to a direction extending along the Z axis, and the term "Y-axis direction" refers to a direction extending along the Y axis. The carriage 38 includes a first carriage 38A and a second carriage 38B. The first carriage 38A is supported by a pair of first guide shafts 39A extending in the Y-axis direction. The first carriage 38A is movable in the Y-axis direction along the first guide shafts 39A by a first driver (not illustrated). The left ends of the first guide shafts 39A are connected to the left wall 14. The right ends of the first guide shafts 39A pass through the right partition 15S and are connected to the right wall 15. The second carriage 38B is supported by a pair of second guide shafts 39B extending in the Z-axis direction. The second carriage 38B is movable in the Z-axis direction along the second guide shafts 39B by a second driver (not illustrated). The second guide shafts 39B are provided on the first carriage 38A. Thus, moving the first carriage 38A in the Y-axis direction moves the second carriage 38B in the Y-axis direction accordingly. The first driver and the second driver are electrically connected to the controller 90 and controlled by the controller 90.

The spindle 30 is provided on the second carriage 38B. The spindle 30 moves on the X, Y, and Z orthogonal coordinate system in accordance with the movement of the carriage 38. More specifically, the spindle 30 moves in the Z-axis direction in accordance with the movement of the second carriage 38B and moves in the Y-axis direction in accordance with the movement of the first carriage 38A. The spindle 30 supports a machining tool 6 such that the machining tool 6 is rotatable. The machining tool 6 may be a milling bar. The spindle 30 cuts the workpiece 5 by rotating the machining tool 6. The spindle 30 includes a gripper 32, a rotator 34, and a seal 35. In one example, the gripper 32 may be a collet chuck. The seal 35 has a cylindrical shape. The seal 35 extends in the up-down direction. The lower end of the seal 35 is provided with the rotator 34. The rotator 34 rotates relative to the seal 35.

The lower end of the rotator 34 is provided with the gripper 32. The gripper 32 rotates together with the rotator 34. The gripper 32 supports (or grips) the upper end of the machining tool 6. Although not illustrated, the gripper 32 includes a plurality of supports arranged on an X-Y plane in the present embodiment. The gripper 32 supports the machining tool 6 by holding the upper end of the machining tool 6 between the supports. The rotator 34 rotates the machining tool 6 supported by the gripper 32. The rotator 34 is connected with a first motor (not illustrated). The first motor is electrically connected to the controller 90 and controlled by the controller 90. Driving the first motor rotates the rotator 34 in the rotational direction θ_{z} around the Z axis. In accordance with the rotation of the rotator 34, the machining tool 6 gripped by the gripper 32 rotates in the rotational direction θ_{z} around the Z axis.

The liquid discharge nozzles 36 are disposed laterally of the spindle 30. Similarly to the spindle 30, the liquid discharge nozzles 36 move on the X, Y, and Z orthogonal coordinate system in accordance with the movement of the carriage 38. In the present embodiment, the number of liquid discharge nozzles 36 is four in total such that one of the liquid discharge nozzles 36 is disposed in front of the spindle 30, another one of the liquid discharge nozzles 36 is disposed behind the spindle 30, still another one of the liquid discharge nozzles 36 is disposed rightward of the spindle 30, and yet another one of the liquid discharge nozzles 36 is disposed leftward of the spindle 30. The liquid discharge nozzles 36 may be disposed at any other suitable locations. The carriage 38 may be provided with any other number of liquid discharge nozzles 36. The outlets of the liquid discharge nozzles 36 are disposed above the clamp 50 and the machining tool 6. As indicated by the arrows in FIGS. 2 and 3, the liquid discharge nozzles 36 discharge the coolant into the machining space 19 while the workpiece 5 is machined with the machining tool 6. The liquid discharge nozzles 36 typically discharge the coolant onto the workpiece 5 and/or the machining tool 6. Each of the liquid discharge nozzles 36 is an example of a liquid discharger. The liquid discharge nozzles 36 are connected to the storage tank 37 through a liquid supply passage (not illustrated). The liquid supply passage may be made of any suitable material and may have any suitable shape and size. In one example, the liquid supply passage is an easily deformable resin tube.

The conveyor 58 moves the tool magazine 40 in an X-axis direction. As used herein, the term "X-axis direction" refers to a direction extending along the X axis. The conveyor 58 is disposed rightward of the tool magazine 40. The conveyor 58 includes a shaft 58A extending in the Y-axis direction. The shaft 58A passes through the right partition 15S. A portion of the shaft 58A (e.g., the right portion of the shaft 58A) is disposed in the first housing space A1. Another portion of the shaft 58A (e.g., the left portion of the shaft 58A) is disposed in the machining space 19. The left end of the shaft 58A is provided with the clamp 50 and the tool magazine 40. The conveyor 58 is movable in the X-axis direction by a third driver (not illustrated). The third driver is electrically connected to the controller 90 and controlled by the controller 90.

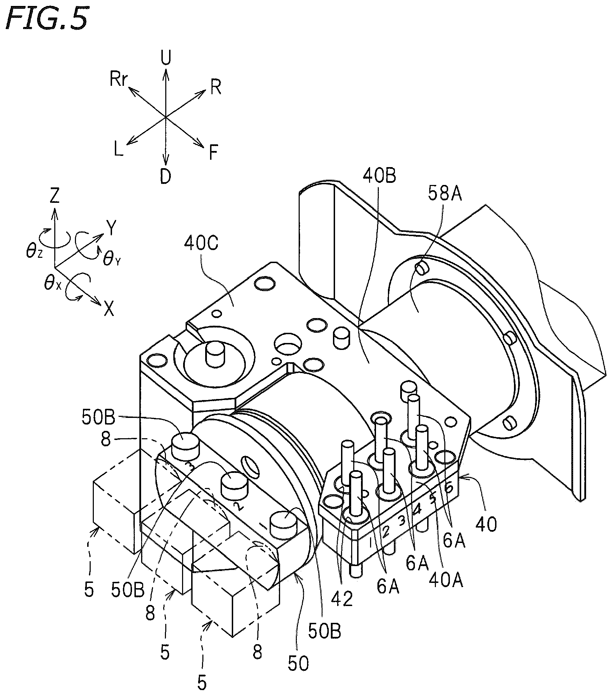

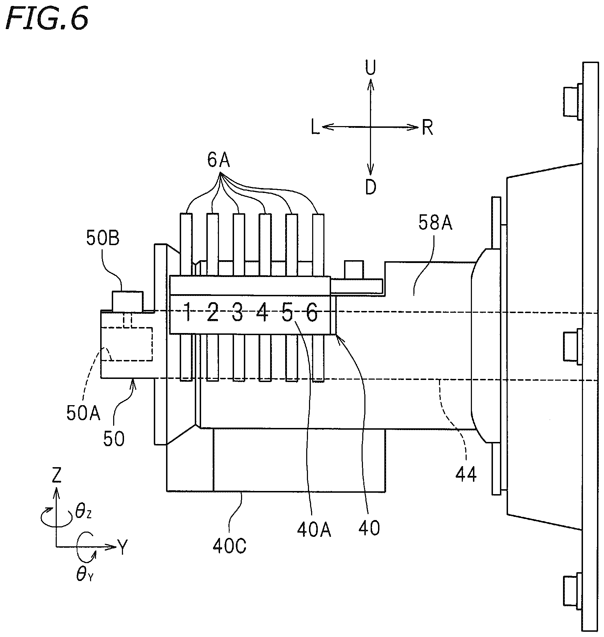

FIG. 5 is a perspective view of the tool magazine 40 and the clamp 50. FIG. 6 is a front view of the tool magazine 40 and the clamp 50. The tool magazine 40 is able to hold a plurality of the machining tools 6. The tool magazine 40 is provided between the clamp 50 and the conveyor 58. Moving the conveyor 58 in the X-axis direction moves the tool magazine 40 in the X-axis direction. The tool magazine 40 includes a first portion 40A, a second portion 40B, and a third portion 40C. The first portion 40A holds the machining tools 6. The second portion 40B is located rearward of the first portion 40A. The second portion 40B is connected to the shaft 58A. The third portion 40C is located rearward of the second portion 40B. The first portion 40A of the tool magazine 40 is provided with a plurality of holes 42 in which the machining tools 6 are to be held. In the present embodiment, the number of holes 42 is six. Each machining tool 6 is inserted into an associated one of the holes 42 such that the upper portion of each machining tool 6 is exposed. Replacement of the machining tool 6 involves: returning the machining tool 6 gripped by the gripper 32 of the spindle 30 to the associated hole 42; moving the spindle 30 to a position over the machining tool 6 to be used next; and causing the gripper 32 to grip the upper end of the machining tool 6 located under the gripper 32.

The shaft 58A is internally provided with a rotation shaft 44. The rotation shaft 44 supports the clamp 50 such that the clamp 50 is rotatable. The rotation shaft 44 extends in the right-left direction. The rotation shaft 44 is coupled to the clamp 50 and the conveyor 58. A second motor (not illustrated) is provided for the rotation shaft 44. The second motor is electrically connected to the controller 90 and controlled by the controller 90. The rotation shaft 44 is rotatable in the rotational direction θ_{Y} around the Y axis by the second motor. The rotation of the rotation shaft 44 in the rotational direction θ_{Y} around the Y axis causes the clamp 50 to rotate in the rotational direction θ_{Y} around the Y axis. The rotation shaft 44 is rotatable independently of the shaft 58A. The rotation of the rotation shaft 44 in the rotational direction θ_{Y} around the Y axis thus does not cause the shaft 58A to rotate in the rotational direction θ_{Y} around the Y axis.

The clamp 50 retains the holder 8 such that the holder 8 is detachable from the clamp 50. As illustrated in FIG. 5, the number of holders 8 retainable by the clamp 50 is three in the present embodiment. In the present embodiment, the clamp 50 retains the workpiece(s) 5 through the holder(s) 8. Alternatively, the clamp 50 may be configured to directly retain the workpiece(s) 5. The clamp 50 is provided with a plurality of the insertion holes 50A. In the present embodiment, the number of insertion holes 50A is three, and the three insertion holes 50A are aligned in the front-rear direction. The connecting pins 8B of the holders 8 are each inserted into an associated one of the insertion holes 50A. The connecting pins 8B inserted into the insertion holes 50A are secured to the clamp 50 with screws 50B. The clamp 50 is movable together with the tool magazine 40. The tool magazine 40 and the clamp 50 are movable in the X-axis direction by the conveyor 58. The rotation of the clamp 50 in the rotational direction θ_{Y} around the Y axis does not cause the tool magazine 40 to rotate in the rotational direction θ_{Y} around the Y axis. The clamp 50 is an example of a retainer. The cutting apparatus 10 according to the present embodiment cuts the workpiece(s) 5 retained by the clamp 50 through the holder(s) 8.

The storage tank 37 is hollow. The storage tank 37 stores the coolant to be used for cutting. The storage tank 37 is disposed below the first bottom partition 13S. The storage tank 37 is detachably disposed at a predetermined location in the second housing space A2. In the present embodiment, the storage tank 37 also serves as a container to collect the coolant discharged from the liquid discharge nozzles 36. The coolant discharged from the liquid discharge nozzles 36 is returned to the storage tank 37 through the drainage port 27H defined in the second bottom partition 27. A filter 37A is detachably disposed in the storage tank 37. The filter 37A is disposed between a collection port (not illustrated) and a supply port (not illustrated) of the storage tank 37. The collection port is in communication with the drainage port 27H. The supply port is in communication with the liquid supply passage. The filter 37A filters the coolant collected into the storage tank 37. The coolant filtered is delivered to the liquid supply passage through the supply port and then reused for cutting.

In one example, the controller 90 is a computer. The controller 90 may include, for example, a central processing unit (CPU), a read-only memory (ROM), a random-access memory (RAM), and a storage medium (such as a memory). The CPU executes a command of a control program. The ROM stores, for example, the program to be executed by the CPU. The RAM is used as a working area where the program is to be expanded. The storage medium stores, for example, various data. In the present embodiment, the controller 90 is disposed in the rear portion of the case body 12. Alternatively, a portion or an entirety of the controller 90 may be disposed outside the case body 12.

The controller 90 controls cutting-related operations using, for example, the program stored in the ROM. Specifically, the controller 90 is connected to, for example, the first driver for the first carriage 38A, the second driver for the second carriage 38B, the third driver for the conveyor 58, the first motor for the spindle 30, the second motor for the clamp 50, and the liquid discharge nozzles 36. The controller 90 thus suitably controls the first driver, the second driver, the third driver, the first motor, the second motor, and the liquid discharge nozzles 36. Accordingly, the controller 90 controls the cutting apparatus 10 so as to cut the workpiece 5 while three-dimensionally changing the relative positions of the workpiece 5 retained by the clamp 50 and the machining tool 6 gripped by the gripper 32. The controller 90 causes the liquid discharge nozzles 36 to discharge the coolant when necessary.

The front upper cover 20 is supported by support arms 22. An end of each support arm 22 is attached to the case body 12. The front upper cover 20 moves in the up-down direction, with each support arm 22 being rotated around its pivot (not illustrated), so as to cover and uncover the opening 180. This enables switching between an open state where the opening 180 of the case body 12 is uncovered by the front upper cover 20 and a closed state where the opening 180 of the case body 12 is covered by the front upper cover 20. The user moves the front upper cover 20 upward so as to uncover the opening 180 in, for example, placing the workpiece 5 in the cutting apparatus 10, removing the workpiece 5 from the cutting apparatus 10, or performing maintenance of the cutting apparatus 10. Uncovering the opening 180 brings the machining space 19 into communication with an external space. The user moves the front upper cover 20 downward so as to cover the opening 180 in carrying out cutting. Covering the opening 180 brings the machining space 19 out of communication with the external space. The front upper cover 20 is an example of a cover. In the present embodiment, the front upper cover 20 is manually movable in the up-down direction by the user. Alternatively, a motor, for example, may be connected to the support arms 22, and the motor may be driven so as to automatically move the front upper cover 20 in the up-down direction.

The front upper cover 20 is provided with a cover body 20A, the gasket 70, and a presser 80. The cover body 20A is provided with a window 21. The window 21 is smaller than the opening 180 of the case body 12 when viewed along the X axis. The window 21 is made of, for example, a transparent acrylic plate or glass plate. The window 21 is not covered by the gasket 70 or the presser 80. The user thus would be able to visually check the machining space 19 through the window 21 if the front upper cover 20 is closed (e.g., during cutting). Because the window 21 is optional, the front upper cover 20 does not necessarily have to be provided with the window 21.

FIG. 7 is a rear perspective view of the front upper cover 20. The gasket 70 and the presser 80 are provided on the rear surface of the front upper cover 20 (i.e., a surface of the front upper cover 20 that faces the machining space 19 of the front upper cover 20). The presser 80 secures the gasket 70 to the cover body 20A. The presser 80 is a flat plate member. In the present embodiment, the presser 80 is a metal presser made by sheet metal working. In a plan view, the presser 80 has a rectangular frame shape. The use of the presser 80 enables the gasket 70 to be secured, not to "point(s)" on the cover body 20A, but to a "surface" of the cover body 20A. The presser 80 surrounds the four sides of the window 21. The presser 80 presses a secured portion 75 (see FIG. 8) of the gasket 70 against the cover body 20A. The presser 80 is secured to the cover body 20A with a plurality of machine screws 81.

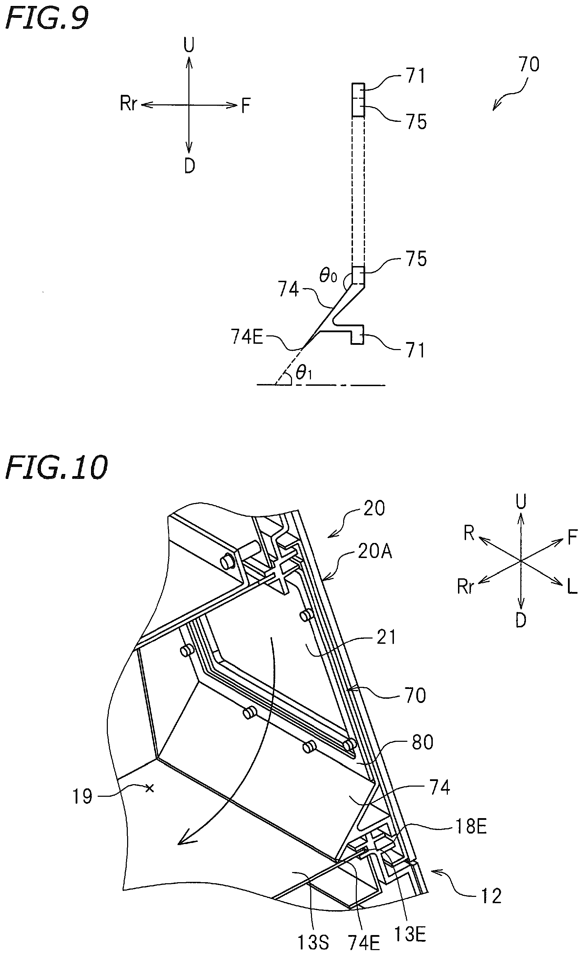

FIG. 8 is a plan view of the gasket 70. FIG. 9 is a cross-sectional view of the gasket 70 taken along the line IX-IX in FIG. 8. The gasket 70 is, for example, an elastic body made of silicon, rubber, or other suitable material. The rear surface of the gasket 70 is preferably more water-repellent than, for example, the rear surface of the window 21. The gasket 70 includes the seal 71, a left side wall 72, a right side wall 73, a guide 74, and the secured portion 75. In the plan view, the left side wall 72, the right side wall 73, and the guide 74 are disposed between the seal 71 and the secured portion 75. Each of the left side wall 72 and the right side wall 73 is an example of a side wall. Fabrication of the gasket 70 involves performing, for example, injection molding such that the components of the gasket 70 are integral with each other.

The secured portion 75 defines the inner edge of the gasket 70. The secured portion 75 is pressed against the cover body 20A by the presser 80. The secured portion 75 has a uniform thickness and is brought into intimate contact with the cover body 20A with no gap therebetween. The gasket 70 is thus secured to the cover body 20A. The secured portion 75 extends along the edge of the window 21. The secured portion 75 surrounds the four sides of the window 21.

The seal 71 defines the outer edge of the gasket 70. The seal 71 functions as a sealer to seal off the opening 180 of the case body 12. In the plan view, the seal 71 has a rectangular frame shape. The seal 71 surrounds the four sides of the opening 180 of the case body 12. In the plan view, the seal 71 conforms in shape to the stepped portion 26 of the case body 12. With the front upper cover 20 closed, the seal 71 faces the stepped portion 26 of the case body 12. With the front upper cover 20 closed, the seal 71 is in contact with the stepped portion 26 of the case body 12. The opening 180 of the case body 12 is thus sealed with the seal 71. This airtightly seals off the machining space 19 during cutting.

The left side wall 72 extends from the left end of the seal 71 toward the rear of the machining space 19. The right side wall 73 extends from the right end of the seal 71 toward the rear of the machining space 19. The left side wall 72 extends along the left side of the machining space 19 (i.e., along the left wall 14). The right side wall 73 extends along the right side of the machining space 19 (i.e., along the right partition 15S). The lower ends of the left side wall 72 and the right side wall 73 are connected to the guide 74. The left side wall 72 extends vertically along the left side of the window 21. The right side wall 73 extends vertically along the right side of the window 21. In the present embodiment, the length (or width) of the left side wall 72 in the front-rear direction gradually increases as the left side wall 72 extends downward, and the length (or width) of the right side wall 73 in the front-rear direction gradually increases as the right side wall 73 extends downward. Alternatively, the left side wall 72 and the right side wall 73 may each have a uniform width. The left side wall 72 and the right side wall 73 each function as a support to enhance the durability and shape retention of the guide 74. The left side wall 72 and the right side wall 73 also have the function of preventing a large amount of the coolant from being scattered on the seal 71 that seals the machining space 19. The right side wall 73 has the function of preventing intrusion of the coolant into the first housing space A1.

The guide 74 extends from the lower end of the secured portion 75 toward the first bottom partition 13S that defines the bottom of the machining space 19. The guide 74 is flat in the plan view. The left end of the guide 74 is coupled to the lower end of the left side wall 72. The right end of the guide 74 is coupled to the lower end of the right side wall 73. The guide 74 is located on a lower region of the gasket 70 surrounded by the seal 71. For example, suppose that a region of the gasket 70 surrounded by the seal 71 (i.e., a region of the gasket 70 that defines the front side of the machining space 19, with the front upper cover 20 closed) is divided into the following three equal portions arranged in the up-down direction: an upper portion, a middle portion, and a lower portion. In this case, the guide 74 is provided on the lower portion. With the front upper cover 20 closed, the guide 74 is located under the window 21. The guide 74 has a substantially triangular shape when viewed in cross section.

The guide 74 is inclined toward the first bottom partition 13S. In the present embodiment, an angle θ₀ formed between the secured portion 75 and the guide 74 is an obtuse angle (which is greater than 90 degrees but less than 180 degrees). The guide 74 has a slope having an inclination angle θ₁ relative to the horizontal direction. In the present embodiment, the angle θ₁ is an acute angle (which is greater than 0 degrees but less than 90 degrees). Alternatively, the angle θ₁ may be 45 degrees, plus or minus 15 degrees. With the front upper cover 20 closed, the guide 74 serves as a liquid passage along which the coolant scattered on the front upper cover 20 is returned to the machining space 19. The angle θ₁ and the inclination θ of the first bottom partition 13S relative to the horizontal direction may have the following relationship: θ ≤ θ₁. In the present embodiment, the angle θ₁ and the inclination θ of the first bottom partition 13S have the following relationship: θ < θ₁. Accordingly, the inclination of the guide 74 is steeper than the inclination of the first bottom partition 13S. Consequently, the coolant is efficiently returned to the machining space 19.

The user disposes the workpiece 5 and the machining tool 6 at predetermined locations in the machining space 19 so as to cut the workpiece 5 using the cutting apparatus 10. The user disposes the storage tank 37 (which stores the coolant) in the second housing space A2. The user moves the front upper cover 20 downward so as to close the opening 180. The machining space 19 is thus sealed off and separated from the external space.

FIG. 10 is a perspective view of the front upper cover 20 in its closed state. FIG. 10 illustrates the rear side of the front upper cover 20 and a portion of the machining space 19 adjacent to the front of the cutting apparatus 10 when viewed obliquely from its left side. With the front upper cover 20 closed, an extremity of the gasket 70 farthest away from the cover body 20A (i.e., an extremity 74E of the guide 74) is located below a lower end 18E of the opening 180 in the direction of gravity. With the front upper cover 20 closed, the extremity 74E of the guide 74 is located below an upper end 13E of the first bottom partition 13S in the direction of gravity. With the front upper cover 20 closed, the extremity 74E of the guide 74 is thus disposed close to the first bottom partition 13S. With the front upper cover 20 closed, the extremity 74E of the guide 74 may be in contact with the first bottom partition 13S or may be out of contact with the first bottom partition 13S.

With the machining space 19 sealed off, the controller 90 controls the cutting apparatus 10 so as to cut the workpiece 5 in accordance with cutting data. The coolant discharged from the liquid discharge nozzles 36 during cutting scatters over the machining space 19. The coolant is also sprinkled, for example, on not only the partitions of the case body 12 that define the machining space 19 (e.g., the left wall 14, the right partition 15S, and the first rear partition 16S) but also the front upper cover 20. As indicated by the arrow in FIG. 10, with the front upper cover 20 closed, the coolant scattered on the front upper cover 20 is returned to the machining space 19 along the guide 74 in the present embodiment. The coolant scattered on the gasket 70 (e.g., the seal 71) is returned to the machining space 19 along the cut-out grooves 26N defined in the front wall 18 of the case body 12. The coolant returned to the machining space 19 is collected into the storage tank 37 through the drainage port 27H defined in the second bottom partition 27.

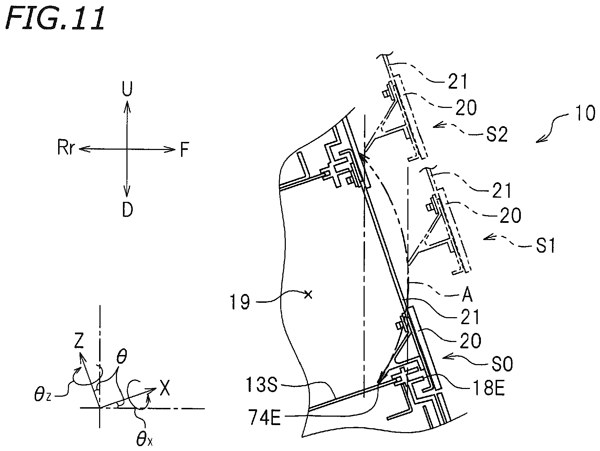

After having finished cutting, the user moves the front upper cover 20 upward so as to uncover the opening 180. The machining space 19 is thus opened and brought into communication with the external space. FIG. 11 is a partial cross-sectional view of the cutting apparatus 10, schematically illustrating a path the front upper cover 20 follows when the front upper cover 20 is opened. The reference sign S0 in FIG. 11 represents a closed state where the front upper cover 20 is closed (i.e., a state where the opening 180 is covered by the front upper cover 20). The reference sign S1 in FIG. 11 represents a semi-open state where the front upper cover 20 is semi-opened. The reference sign S2 in FIG. 11 represents an open state where the front upper cover 20 is fully opened (i.e., a state where the opening 180 is uncovered by the front upper cover 20 in a side view). In the open state S2, the extremity 74E of the guide 74 is out of contact with the case body 12.

As indicated by the chain double-dashed lines in FIG. 11, opening the front upper cover 20 of the cutting apparatus 10 from the closed state S0 to the open state S2 causes the extremity 74E of the guide 74 to follow a path A. In the present embodiment, the path A is in the form of a segment of a circle. While the front upper cover 20 of the cutting apparatus 10 moves from the closed state S0 to the semi-open state S1 and then to the open state S2, the extremity 74E of the guide 74 is located within the machining space 19 or overlaps with the opening 180 when viewed along the X axis (i.e., when viewed in the front-rear direction of the machining space 19). In other words, when the front upper cover 20 of the cutting apparatus 10 is opened or closed, the extremity 74E of the guide 74 will not move outward of the edge of the opening 180 as viewed along the X axis.

After cutting has been finished, the coolant may still be adhering to the front upper cover 20. The cutting apparatus 10 according to the present embodiment, however, is configured such that the extremity 74E of the guide 74 is located within the machining space 19 when the front upper cover 20 is in the closed state S0. While the front upper cover 20 moves from the semi-open state S1 to the open state S2, the extremity 74E of the guide 74 overlaps with the opening 180 when viewed along the X axis (i.e., when viewed in the front-rear direction of the machining space 19). Thus, if droplets of the coolant drip from the front upper cover 20 when the front upper cover 20 is opened, the droplets would fall into the machining space 19. In other words, the droplets of the coolant will not fall outside of the machining space 19. This makes it unlikely that an area adjacent to the cutting apparatus 10 will be contaminated with the coolant after cutting. Consequently, the present embodiment saves the time and trouble of cleaning, resulting in enhanced user convenience.

The cutting apparatus 10 according to the present embodiment is configured such that the inclination θ₁ of the guide 74 relative to the horizontal direction is an acute angle. Thus, with the front upper cover 20 closed, the coolant scattered on the front upper cover 20 is efficiently returned to the machining space 19.

The case body 12 of the cutting apparatus 10 according to the present embodiment includes the first bottom partition 13S that defines the bottom of the machining space 19. The first bottom partition 13S and the guide 74 have the following relationship: θ < θ₁, where θ denotes the inclination of the first bottom partition 13S relative to the horizontal direction and θ₁ denotes the inclination of the guide 74 relative to the horizontal direction. Because the inclination θ₁ of the guide 74 is steeper than the inclination θ of the first bottom partition 13S, the coolant scattered on the front upper cover 20 is efficiently returned to the machining space 19, with the front upper cover 20 closed.

The cutting apparatus 10 according to the present embodiment is configured such that the extremity 74E of the guide 74 is located below the upper end of the first bottom partition 13S, with the front upper cover 20 closed. The extremity 74E of the guide 74 is thus brought close to the first bottom partition 13S so as to prevent the coolant flowing along the guide 74 from spattering around.

The front upper cover 20 of the cutting apparatus 10 according to the present embodiment includes the seal 71 to seal the opening 180 of the case body 12. The seal 71 is made of, for example, an easily deformable material, such as silicon, rubber, or other suitable material. If the seal 71 is easily touchable by the user, the user may scratch or deform the seal 71 by mistake or may detach the seal 71 unintentionally. In the present embodiment, however, the seal 71 is disposed on the rear surface of the front upper cover 20 so as to make it difficult for the user to touch the seal 71. The problems just mentioned are thus unlikely to occur, enabling the seal 71 to reliably provide its sealing effect.

The seal 71 and the guide 74 of the cutting apparatus 10 according to the present embodiment are integral with each other. This reduces the number of components of the cutting apparatus 10. Consequently, the present embodiment saves the time, trouble, and cost of manufacturing the cutting apparatus 10.

The case body 12 of the cutting apparatus 10 according to the present embodiment includes the left wall 14 that defines the left side of the machining space 19, and the right partition 15S that defines the right side of the machining space 19. The front upper cover 20 includes the left side wall 72 extending along the left wall 14 from the left end of the guide 74, and the right side wall 73 extending along the right partition 15S from the right end of the guide 74. The width of the left side wall 72 along the left wall 14 gradually increases as the left side wall 72 extends downward. The width of the right side wall 73 along the right partition 15S gradually increases as the right side wall 73 extends downward. The left side wall 72 and the right side wall 73 are thus more successfully prevented from interfering with the case body 12 when the front upper cover 20 is opened or closed in the up-down direction. The left side wall 72 and the right side wall 73 each serve as a support for the guide 74 that extends toward the machining space 19, with the front upper cover 20 opened, and extends into the machining space 19, with the front upper cover 20 closed. This enhances the durability and shape retention of the guide 74. The left side wall 72 and the right side wall 73 each serve as a cover to prevent a large amount of the coolant from being scattered on the seal 71. Consequently, the coolant is prevented from reaching the lateral surfaces of the gasket 70 and reducing the sealing effect of the seal 71.

The case body 12 of the cutting apparatus 10 according to the present embodiment includes the stepped portion 26 extending along the edge of the opening 180 and recessed toward the machining space 19. The front upper cover 20 is thus able to suitably seal the opening 180 of the case body 12. Consequently, the airtightness of the machining space 19 is more successfully maintained during cutting.

The stepped portion 26 of the cutting apparatus 10 according to the present embodiment includes the cut-out grooves 26N extending to the machining space 19. Thus, with the front upper cover 20 closed, the coolant scattered on the gasket 70 is efficiently returned to the machining space 19.

The front upper cover 20 of the cutting apparatus 10 according to the present embodiment includes the window 21 located above the guide 74. The user would thus be able to visually check the machining space 19 from outside if the opening 180 is covered by the front upper cover 20.

In the foregoing embodiment, the components of the gasket 70 are made of an elastic body and integral with each other. The components of the gasket 70, however, do not necessarily have to be integral with each other. Alternatively, a portion or an entirety of the gasket 70 may include separate component(s). The guide 74 may be, for example, a separate component independent of the other components of the gasket 70. The guide 74 may be made of, for example, metal (such as stainless steel, aluminum, iron, or copper), plastic, or other suitable material. In one example, the gasket 70 may include either one of the left side wall 72 and the right side wall 73.

## Claims

1. A cutting apparatus (10) comprising:
a case body (12) provided with an opening (180), the case body (12) internally including a machining space (19), wherein the case body (12) includes a side partition (14, 15S) that defines a side of the machining space (19);
a cover (20) attached to the case body (12), the cover (20) being configured to change between an open state where the cover (20) uncovers the opening (180) and a closed state where the cover (20) covers the opening (180);
a retainer (50) disposed in the machining space (19), the retainer (50) being configured to retain a workpiece (5);
a gripper (32) disposed in the machining space (19), the gripper (32) being configured to grip a machining tool (6) to cut the workpiece (5); and
a liquid discharger (36) to discharge a coolant into the machining space (19),
the cutting apparatus (10) being **characterized in that**
the cover (20) includes
a cover body (20A), and
a gasket (70) provided on a surface of the cover (20) that faces the machining space (19),
the gasket (70) includes
a guide (74) extending toward or into the machining space (19) from the cover body (20A),
a seal (71) to seal the opening (180) of the case body (12), and
a side wall (72, 73) extending along the side partition (14, 15S) from an end of the guide (74), wherein
with the cover (20) in the closed state, an extremity (74E) of the guide (74) is located below a lower end (18E) of the opening (180), and
during a transition from the closed state to the open state, the extremity (74E) of the guide (74) is located within the machining space (19) or overlaps with the opening (180) when viewed in a front-rear direction of the machining space (19).

2. The cutting apparatus (10) according to claim 1, wherein
the guide (74) is inclined at an acute angle relative to a horizontal direction.

3. The cutting apparatus (10) according to claim 1 or 2, wherein
the case body (12) includes a bottom partition (13S) that defines a bottom of the machining space (19), and
the bottom partition (13S) and the guide (74) have the following relationship: θ < θ₁, where θ denotes an inclination of the bottom partition (13S) relative to a horizontal direction and θ₁ denotes an inclination of the guide (74) relative to the horizontal direction.

4. The cutting apparatus (10) according to claim 3, wherein
with the cover (20) in the closed state, the extremity (74E) of the guide (74) is located below an upper end (13E) of the bottom partition (13S).

5. The cutting apparatus (10) according to any one of claims 1 to 4, wherein
the seal (71) is integral with the guide (74).

6. The cutting apparatus (10) according to any one of claims 1 to 5, wherein
a width of the side wall (72, 73) along the side partition (14, 15S) gradually increases as the side wall (72, 73) extends downward.

7. The cutting apparatus (10) according to any one of claims 1 to 6, wherein
the case body (12) includes a stepped portion (26) extending along an edge of the opening (180) and recessed toward the machining space (19).

8. The cutting apparatus (10) according to claim 7, wherein
the stepped portion (26) includes a cut-out groove (26N) extending to the machining space (19).

9. The cutting apparatus (10) according to any one of claims 1 to 8, wherein
the cover (20) includes a window (21) through which the machining space (19) is visually checked, with the opening (180) covered by the cover (20).

## Patentansprüche

1. Schneidvorrichtung (10), umfassend:
einen Gehäusekörper (12), der mit einer Öffnung (18O) ausgestattet ist, wobei der Gehäusekörper (12) innen einen Bearbeitungsraum (19) umfasst, wobei der Gehäusekörper (12) ein Seitenteil (14, 15S) umfasst, das eine Seite des Bearbeitungsraums (19) definiert;
eine Abdeckung (20), die an dem Gehäusekörper (12) angebracht ist, wobei die Abdeckung (20) konfiguriert ist, zwischen einem geöffneten Zustand, in welchem die Abdeckung (20) die Öffnung (18O) freilegt und einem geschlossenen Zustand zu wechseln, in welchem die Abdeckung (20) die Öffnung (18O) bedeckt;
eine Halterung (50), die in dem Bearbeitungsraum (19) angeordnet ist, wobei die Halterung (50) konfiguriert ist, ein Werkstück (5) zu halten;
eine Greifvorrichtung (32), die in dem Bearbeitungsraum (19) angeordnet ist, wobei die Greifvorrichtung (32) konfiguriert ist, ein Bearbeitungswerkzeug (6) zu greifen, um das Werkstück (5) zu schneiden; und
eine Flüssigkeitsentladevorrichtung (36), um ein Kühlmittel in den Bearbeitungsraum (19) zu entladen,
wobei die Schneidvorrichtung (10) **dadurch gekennzeichnet ist, dass** die Abdeckung (20) einen Abdeckungskörper (20A), und eine Dichtungsvorrichtung (70) umfasst, die auf einer Oberfläche der Abdeckung (20) bereitgestellt ist, die dem Bearbeitungsraum (19) zugewandt ist,
wobei die Dichtungsvorrichtung (70) umfasst
eine Führung (74), die sich in Richtung oder in den Bearbeitungsraum (19) von dem Abdeckungskörper (20A) erstreckt,
eine Dichtung (71), um die Öffnung (18O) des Gehäusekörpers (12) abzudichten, und
eine Seitenwand (72, 73), die sich entlang des Seitenteils (14, 15 S) von einem Ende der Führung (74) erstreckt, wobei
wenn sich die Abdeckung (20) in dem geschlossenen Zustand befindet, ein Endpunkt (74E) der Führung (74) unterhalb eines unteren Endes (18E) der Öffnung (18O) liegt, und
während eines Übergangs von dem geschlossenen Zustand zu dem geöffneten Zustand der Endpunkt (74E) der Führung (74) innerhalb des Bearbeitungsraums (19) liegt oder in einer Vorne-Hinten-Richtung des Bearbeitungsraums (19) gesehen mit der Öffnung (18O) überlappt.

2. Die Schneidvorrichtung (10) gemäß Anspruch 1, wobei
die Führung (74) in einem spitzen Winkel bezüglich einer horizontalen Richtung geneigt ist.

3. Die Schneidvorrichtung (10) gemäß Anspruch 1 oder 2, wobei
der Gehäusekörper (12) ein Bodenteil (13S) umfasst, das einen Boden des Bearbeitungsraums (19) definiert, und
das Bodenteil (13S) und die Führung (74) die folgende Beziehung aufweisen: θ<θ₁, wobei θ eine Neigung des Bodenteils (13S) bezüglich einer horizontalen Richtung bezeichnet und θ₁ eine Neigung der Führung (74) bezüglich der horizontalen Richtung bezeichnet.

4. Die Schneidvorrichtung (10) gemäß Anspruch 3, wobei
wenn sich die Abdeckung (20) in dem geschlossenen Zustand befindet, der Endpunkt (74E) der Führung (74) unterhalb eines oberen Endes (13E) des Bodenteils (13S) befindet.

5. Die Schneidvorrichtung (10) gemäß einem der Ansprüche 1 bis 4, wobei
die Dichtung (71) einstückig mit der Führung (74) ist.

6. Die Schneidvorrichtung (10) gemäß einem der Ansprüche 1 bis 5, wobei
eine Weite der Seitenwand (72, 73) entlang des Seitenteils (14, 15S) allmählich zunimmt, während sich die Seitenwand (72, 73) nach unten erstreckt.

7. Die Schneidvorrichtung (10) gemäß einem der Ansprüche 1 bis 6, wobei
der Gehäusekörper (12) einen abgestuften Abschnitt (26) umfasst, der sich entlang einer Kante der Öffnung (18O) erstreckt und in Richtung des Bearbeitungsraums (19) ausgespart ist.

8. Die Schneidvorrichtung (10) gemäß Anspruch 7, wobei
der abgestufte Abschnitt (26) eine ausgeschnittene Nut (26N) umfasst, die sich zu dem Bearbeitungsraum (19) erstreckt.

9. Die Schneidvorrichtung gemäß einem der Ansprüche 1 bis 8, wobei
die Abdeckung (20) ein Fenster (21) umfasst, durch welches der Bearbeitungsraum (19) visuell überprüft wird, wenn die Öffnung (18O) von der Abdeckung (20) bedeckt ist.

## Revendications

1. Appareil de coupe (10) comprenant :
un corps de boîtier (12) pourvu d'une ouverture (18O), le corps de boîtier (12) comportant à l'intérieur un espace d'usinage (19), dans lequel le corps de boîtier (12) comporte une cloison latérale (14, 15S) qui définit un côté de l'espace d'usinage (19) ;
un couvercle (20) fixé au corps de boîtier (12), le couvercle (20) étant configuré pour basculer entre un état ouvert où le couvercle (20) découvre l'ouverture (18O) et un état fermé où le couvercle (20) recouvre l'ouverture (18O) ;
un dispositif de retenue (50) disposé dans l'espace d'usinage (19), le dispositif de retenue (50) étant configuré pour retenir une pièce à usiner (5) ;
un dispositif de saisie (32) disposé dans l'espace d'usinage (19), le dispositif de saisie (32) étant configuré pour saisir un outil d'usinage (6) pour couper la pièce à usiner (5) ; et
un dispositif d'évacuation de liquide (36) pour évacuer un liquide de refroidissement dans l'espace d'usinage (19),
l'appareil de coupe (10) étant **caractérisé en ce que**
le couvercle (20) comporte
un corps de couvercle (20A), et
un joint (70) prévu sur une surface du couvercle (20) qui fait face à l'espace d'usinage (19),
le joint (70) comporte
un guide (74) s'étendant vers ou dans l'espace d'usinage (19) à partir du corps de couvercle (20A),
un joint d'étanchéité (71) pour sceller l'ouverture (18O) du corps de boîtier (12), et
une paroi latérale (72, 73) s'étendant le long de la cloison latérale (14, 15S) à partir d'un bout du guide (74), dans lequel
avec le couvercle (20) à l'état fermé, une extrémité (74E) du guide (74) est située sous un bout inférieur (18E) de l'ouverture (18O), et
pendant une transition de l'état fermé à l'état ouvert, l'extrémité (74E) du guide (74) est située à l'intérieur de l'espace d'usinage (19) ou chevauche l'ouverture (18O) lorsqu'on regarde dans une direction avant-arrière de l'espace d'usinage (19).

2. Appareil de coupe (10) selon la revendication 1, dans lequel
le guide (74) est incliné d'un angle aigu par rapport à une direction horizontale.

3. Appareil de coupe (10) selon la revendication 1 ou 2, dans lequel
le corps de boîtier (12) comporte une cloison inférieure (13S) qui définit un fond de l'espace d'usinage (19), et
la cloison inférieure (13S) et le guide (74) ont la relation suivante : θ < θ₁, où θ désigne une inclinaison de la cloison inférieure (13S) par rapport à une direction horizontale et θ₁ désigne une inclinaison du guide (74) par rapport à la direction horizontale.

4. Appareil de coupe (10) selon la revendication 3, dans lequel
avec le couvercle (20) à l'état fermé, l'extrémité (74E) du guide (74) est située sous un bout supérieur (13E) de la cloison inférieure (13S).

5. Appareil de coupe (10) selon l'une quelconque des revendications 1 à 4, dans lequel
le joint d'étanchéité (71) est solidaire du guide (74).

6. Appareil de coupe (10) selon l'une quelconque des revendications 1 à 5, dans lequel
une largeur de la paroi latérale (72, 73) le long de la cloison latérale (14, 15S) augmente progressivement à mesure que la paroi latérale (72, 73) s'étend vers le bas.

7. Appareil de coupe (10) selon l'une quelconque des revendications 1 à 6, dans lequel
le corps de boîtier (12) comporte une partie étagée (26) s'étendant le long d'un bord de l'ouverture (18O) et en retrait vers l'espace d'usinage (19).

8. Appareil de coupe (10) selon la revendication 7, dans lequel
la partie étagée (26) comporte une rainure découpée (26N) s'étendant vers l'espace d'usinage (19).

9. Appareil de coupe (10) selon l'une quelconque des revendications 1 à 8, dans lequel
le couvercle (20) comporte une fenêtre (21) à travers laquelle l'espace d'usinage (19) est contrôlé visuellement, avec l'ouverture (18O) recouverte par le couvercle (20).
